# EUROPEAN PATENT SPECIFICATION

(11) **EP 2 616 385 B1**
(45) Date of publication and mention of the grant of the patent: **09.10.2013**
(21) Application number: 12709704.6
(22) Date of filing: 15.02.2012
(51) Int. Cl.: B67D 3/00, G05D 11/13

(54) **BEVERAGE DISPENSING SYSTEM**
GETRÄNKEAUSGABESYSTEM
SYSTÈME DE DISTRIBUTION DE BOISSON

(30) Priority: 28.02.2011 US 201161447441 P
(43) Date of publication of application: 24.07.2013
(73) Proprietor: Strauss Water Ltd, Petach Tikva 49517 (IL)
(72) Inventor: WILDER, Haim, 43555 Raanana (IL); KRYSTAL, Eyal, 44250 Kfar Saba (IL); BAR-ON, Omri, 96222 Jerusalem (IL)
(74) Representative: Boult Wade Tennant
(86) International application number: PCT/IL2012/050047
(87) International publication number: WO 2012/117399

(56) References cited:
- WO-A1-2009/094754
- DE-U1- 20 209 969
- US-A- 4 624 395
- US-A- 4 792 059
- US-A1- 2006 005 712
- US-A1- 2009 159 611

## Description

### FIELD OF THE INVENTION

This invention relates to a dispensing system for a beverage, particularly drinking water that allows adjustment of the temperature of the dispensed liquid to achieve a desired temperature.

### BACKGROUND OF THE INVENTION

Systems for dispensing beverages at different temperatures are known, and especially for dispensing of water for household uses.

For example, Chinese utility model application CN201365830 discloses a double-container double-control water dispenser, having a water boiling tank and a water storage tank, water level controlling switches, electrically controlled temperature controller, and water inlet and outlet pipes, which are arranged as to avoid the blending of boiled water and unboilled water.

UK Patent GB2143031 describes a hot water dispenser, having a separate hot water container with a heater and a cold water container. The containers are interconnected, such that when hot water is drawn from a tap, cold water is fed from the cold water container through a tube to a point adjacent the bottom of the hot water container so that the hot water to be dispensed is kept at or near the correct dispensing temperature.

Further examples are disclosed in patent publications US 5,858,437, US 6,609,391, US 2004/011814, US 6,871,675, US 47 92 059 and US 2009/0159611 A1.

### SUMMARY OF THE INVENTION

The present invention provides a dispensing system for a beverage that permit adjustment of the temperature of the dispensed liquid to a desired temperature including, by a specific embodiment, cooled liquid, heated liquid, liquid at ambient ("*room*") temperature and a range of temperatures in between.

This is achieved, in accordance with the invention, by feeding a beverage dispensing outlet with beverage at different temperatures and adjusting the flow of liquid of each temperature so as to achieve a desired temperature of the dispensed beverage.

In accordance with a first aspect of the invention, there is provided a system for dispensing a beverage including, but not limited to water. The system comprises a dispensing outlet for dispensing beverage at a controlled temperature, a mixing chamber upstream in a flow-path to said outlet, such that the dispensed beverage flows from said chamber to said outlet, and at least three feeding lines that feed beverage of at least three different defined temperatures to said chamber. The system also comprises a controller that controls the feed from each of the feeding lines so as to achieve, through proper mixing of the beverage of different temperatures, a desired temperature of the dispensed beverage. Typically, the system includes also a user interface that permits a user to set the temperature of the dispensed beverage to a desired temperature. Once set, upon activation of the system so as to dispense beverage, the flow rate in each of the feeding lines is adjusted to achieve the desired, set temperature.

In accordance with the invention, the beverage fed by one or more of the feeding lines is mixed within the mixing chamber and this ensures that the dispensed beverage will have the desired temperature as set by the user. By one embodiment, the outlet is integrally formed at the bottom of the chamber. However, other arrangements are also contemplated within the scope of the present invention.

In accordance with an embodiment of the invention the chamber includes dividers that divide the chamber into a plurality of sub-chambers. Typically, each sub-chamber is fed beverage by a different feeding line. The arrangement is typically such that each of these sub-chambers opens to a single dispensing outlet of the mixing chamber, which is mutual to all sub-chambers and which, in accordance with one embodiment, is the beverage dispensing outlet of the system.

The system of the invention typically, although not exclusively, comprises a feeding line for a heated beverage, a feeding line for beverage at ambient temperature and a feeding line for cooled beverage. In accordance with this embodiment each feeding line feeds beverage at its specific temperature to the mixing chamber and therefrom to the dispensing outlet and the amount of liquid fed from each line is adjusted to achieve the desired temperature. In the specific embodiment of such three defined temperatures, the temperature of the dispensed beverage may be adjusted to dispense heated beverage, cooled beverage or in a range of temperatures in between according to the system's temperature accuracy and taking into account the temperature drop or rise in the beverage as it flows through the feeding lines. In the specific embodiment whereby the beverage is drinking water, the dispensed liquid can be used to prepare a hot beverage such as coffee or tea, may be used to dispense chilled water, water at room temperature, etc. By an example, the heated beverage may be at a temperature in the range of 90-98°C and the cooled beverage may be at a temperature range of 2-10°C.

In accordance with one embodiment of the invention, the system includes a heated beverage reservoir, typically a chamber formed at the top of a beverage heating unit. In accordance with another embodiment of the invention, the system includes a cooled beverage reservoir. Typically, the system includes also a cooling unit and the beverage flows through the cooling unit, cooled thereby, and then into the cooled beverage reservoir.

In accordance with an embodiment of the invention, the system includes also a reservoir for a beverage at ambient ("*room*") temperature. Typically, where the beverage is water, this reservoir stores filtered or purified water. By an embodiment of the invention, the heated beverage reservoir and the cold beverage reservoir are fed beverage from the reservoir that stores beverage at ambient temperature.

In accordance with an embodiment of the invention, one or more pumps for propelling a beverage through said one or more feeding lines may be included in the system for propelling beverage towards the mixing chamber.

By one embodiment, the system comprises a first pump for propelling heated beverage through the heated beverage feeding line, a second pump for propelling beverage through the ambient temperature beverage feeding line, a third pump for propelling beverage from the ambient temperature reservoir to the cooled beverage reservoir through a liquid cooling unit, and a fourth pump for propelling beverage from the cooled beverage reservoir through the cooled beverage feeding line. The third pump is typically activated automatically to fill the cooled beverage reservoir. For this purpose, the cooled beverage reservoir may include a liquid level sensor that through a closed-circuit control activates the third pump upon emptying of this reservoir. Against this, the first, second and fourth pumps, are automatically activated during liquid dispensing and their pumping rates are adjusted so as to achieve a desired dispensed beverage temperature. The user typically sets a desired temperature for the dispensed beverage, and can then press a certain dispensing activation button or switch, whereupon the respective first, second and fourth pumps are activated to yield a beverage at the desired temperature as set by the user.

In accordance with another embodiment of the invention, a single pump provides a propelling force for more than one feeding line. Typically, in accordance with this embodiment, such a pump's outlet is linked, through a manifold, to more than one beverage feeding line whereupon the flow rate in each of such feeding lines is then controlled by valves or other flow controlling elements fitted on the individual feeding lines. In accordance with this embodiment, the beverage propelled by the pump may then be heated or cooled to a certain fixed temperature by appropriate elements fitted on the different feeding lines. By one example, such a centralized pump is in flow communication with an outlet of an ambient temperature beverage reservoir and being configured to draw beverage from the reservoir and propel it, through a manifold system, to each of three feeding lines: an ambient temperature feeding line, a hot beverage feeding line which includes a heating arrangement for heating the beverage channeled into this line, and a cooled beverage feeding line which includes a cooling element for cooling the beverage channeled therethrough. While, by one embodiment, the cooled beverage feeding line may include an inline cooling system that cools the beverage as it flows through this feeding line on its way to the dispensing outlet, in accordance with one embodiment a cooled liquid reservoir is included and the beverage, cooled by the cooling element, is stored within the cooled beverage reservoir and can be drawn therefrom on demand. In accordance with this embodiment, an auxiliary pump is provided that is configured for drawing liquid from the cooled beverage reservoir and propelling it to the mixing chamber.

Also provided, by another aspect of the invention, is a beverage dispenser, particularly a dispenser for drinking water that comprises a system of the kind defined and disclosed herein.

As will be appreciated by the reader, an advantage of the invention is the fact that the temperature of the dispensed beverage is not limited to certain discreet values, typically pre-set through the system's characteristics as in existing beverage dispensers, but rather the user has a large flexibility for setting the temperature according to his liking and need. Also, unlike beverage dispensers that dispense beverage at different temperatures from different dispensing outlets, including for example a hot beverage outlet and a cooled beverage outlet, in accordance with the invention there is a single outlet that dispenses beverage at a desired temperature.

### BRIEF DESCRIPTION OF THE DRAWINGS

In order to understand the invention and to see how it may be carried out in practice, embodiments will now be described, by way of non-limiting example only, with reference to the accompanying drawings, in which:
**Fig. 1** is a perspective view of a water dispenser which includes a water dispensing system in accordance with an embodiment of the invention.
**Figs. 2A-2D** are, respectively, a bottom view, side view, horizontal cross-sectional view along line 2C-2C in Fig. 2B and a vertical cross-sectional view through line 2D-2D in Fig. 2A, of a mixing chamber with its integral dispensing outlet, according to an embodiment of the invention.
**Figs. 3A** and **3B** are schematic illustrations of two embodiments of a flow system in accordance with the invention.
**Fig. 3C** is a schematic illustration of the control unit according to an embodiment of the invention.
**Figs. 4A-4D** show, respectively, front view, left side view, right side view and rear view of the water flow system elements of the dispenser of Fig. 1.

### DETAILED DESCRIPTION OF EMBODIMENTS

In the following description the invention will be illustrated with reference to a water dispenser, namely a dispenser and system where the beverage is water. Accordingly, reference in the description below will be made to *"water reservoir"*, *"hot water feeding line", "cold water feeding line ",* etc. It should be noted, however, that the specific reference which is made to a water dispenser is intended for purposes of illustration and is not intended to be limiting in any way. Rather, the general teaching of the invention may be applicable, at times with some modifications, for different kinds of beverages, for example, for milk, flavored beverages, etc.

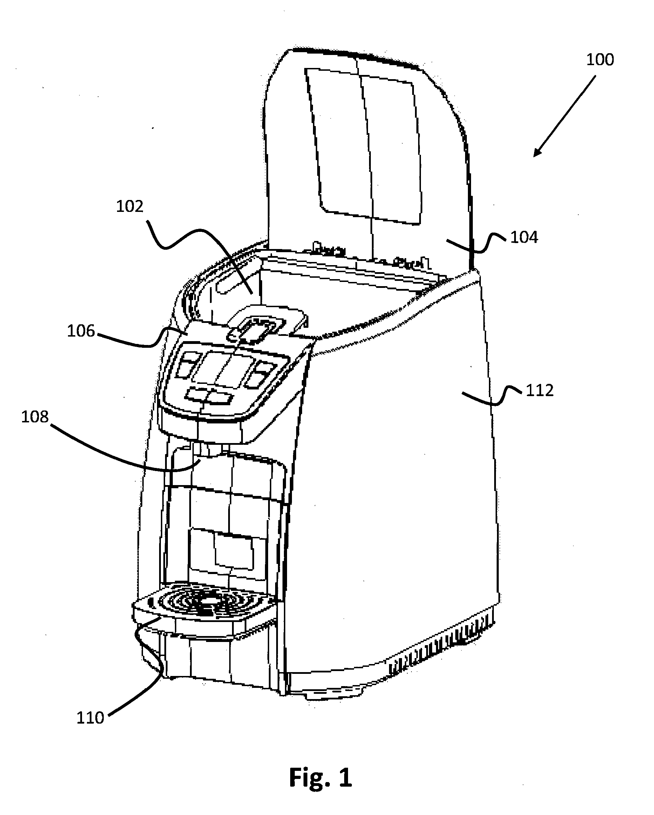

Reference is first being made to **Fig. 1** showing a water dispenser **100**, typically designed for home use, which includes a water container **102**, a hinged lid **104** that covers the container, a user accessible control consul **106**, a water dispensing outlet **108**, a tray element **110** and a housing **112.** This water dispenser includes a water filtration system which is disclosed and claimed in PCT Application Serial No. PCT/IL2012/050038. Briefly, without going into details, source water, typically tap water, is introduced into a container **102** and is then filtered through the system and collected in an ambient temperature water reservoir, that will be described below.

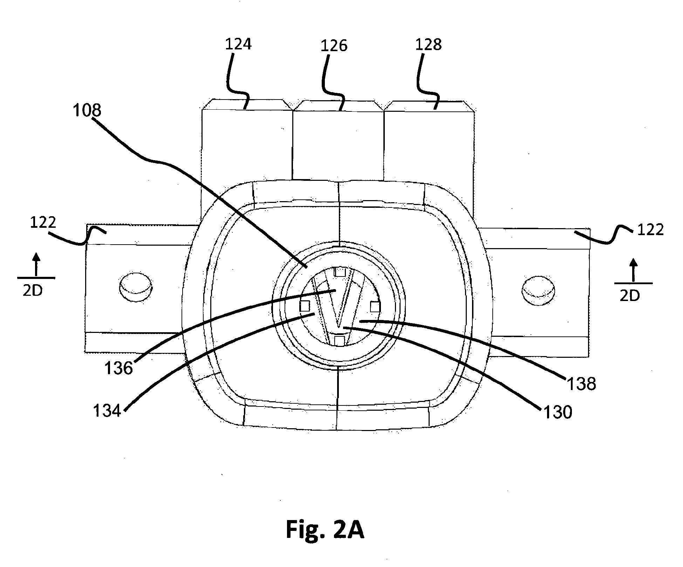

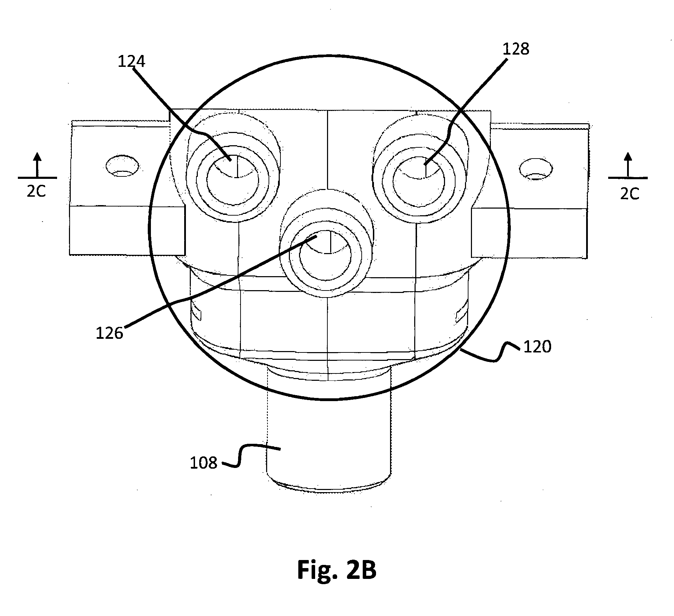

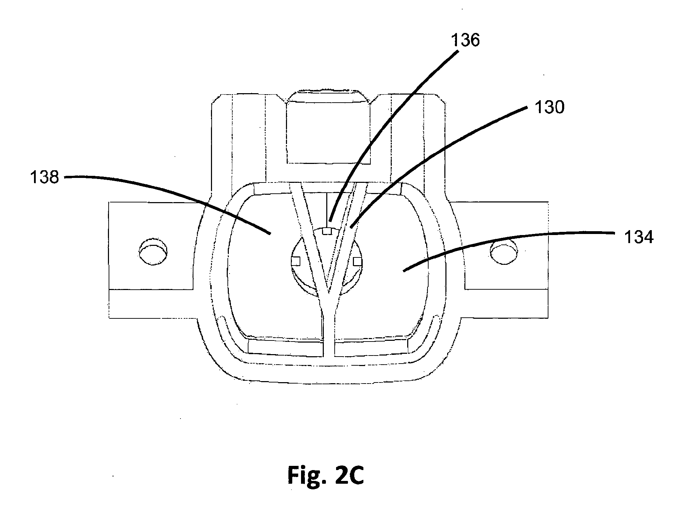

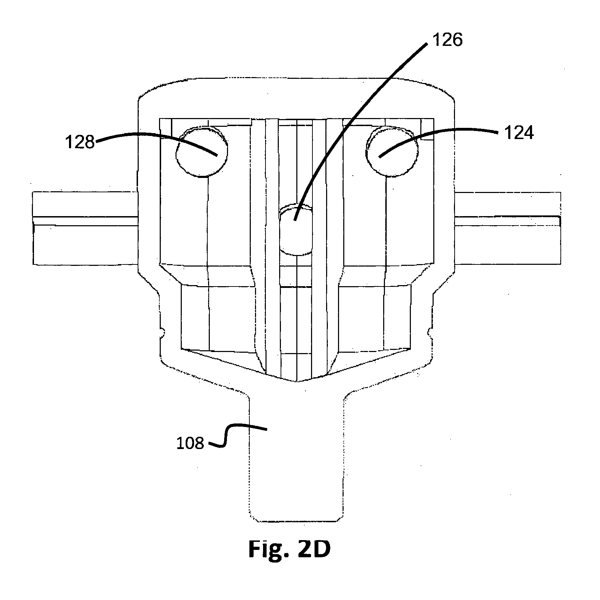

Reference is now being made to **Figs. 2A** to **2D** showing a mixing chamber **120** which is integrally formed with the water dispensing outlet **108**. The mixing chamber is fitted with two side lugs **122** which serve to fix it to the device. The chamber includes three water inlets **124-128**, each of which is connected to one of three feeding lines - a cooled water feeding line, an ambient temperature water feeding line, and a heated water feeding line, respectively.

The mixing chamber is fitted with a *"Y"*-shaped divider **130** which divides the mixing chamber into three sub-chambers **134, 136** and **138**, each of which opening to one of the inlets **124, 126** and **128** and thereby receive the respective fed water from these inlets. The sub-chambers are drained into the mutual water dispensing outlet **108** and at the outlet the water coming from the different feeding lines is thus mixed to achieve a desired, set temperature, as will be further illustrated below.

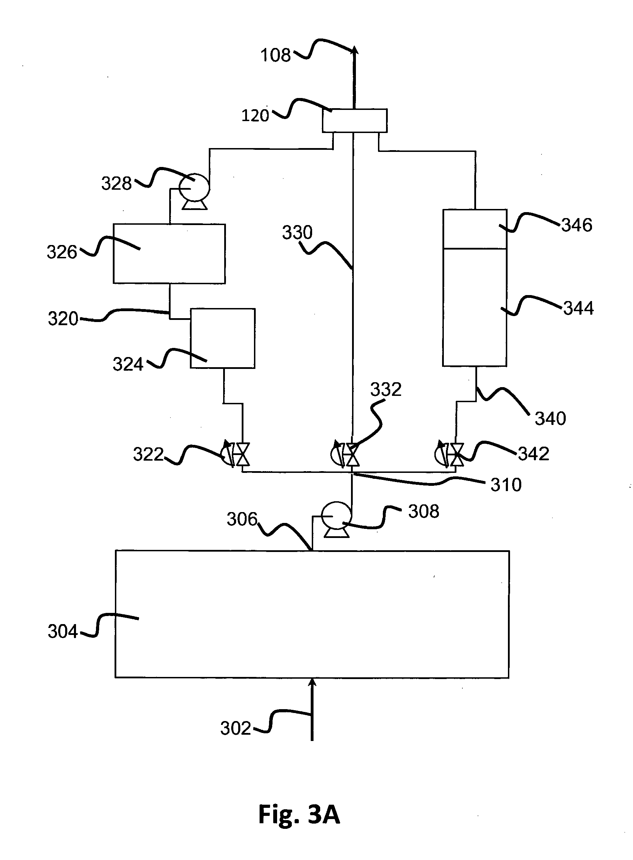

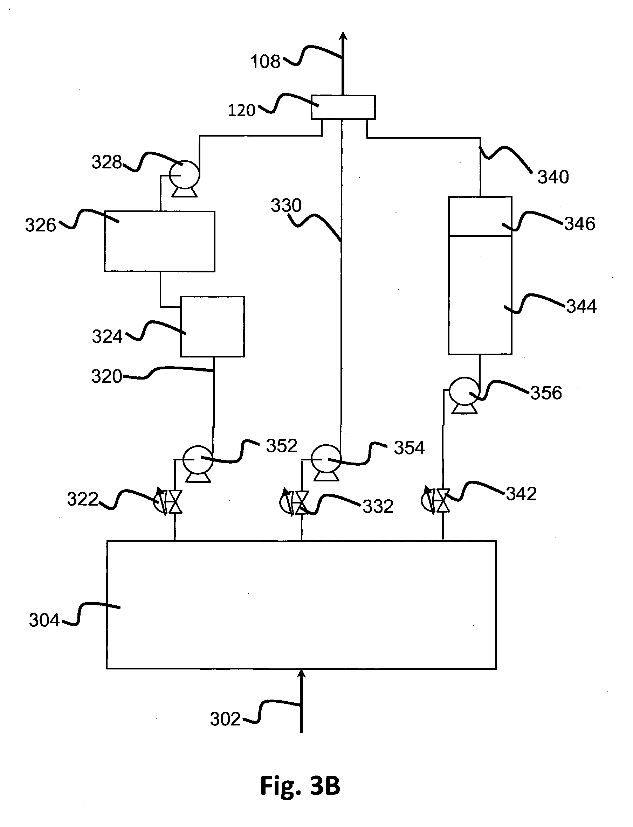

The embodiments illustrated schematically in **Figs. 3A** and **3B**, show two possible configurations of the system of the invention. In each of these configurations, the system includes three flow lines: a cooled water flow line, an ambient temperature water flow line, and a heated water flow line. Referring first to **Fig. 3A**, water, typically filtered water is fed through **302** into an ambient temperature water reservoir **304.** Fitted at the outlet **306** of reservoir **304** is a pump **308** that propels the water into the feeding lines as will be described below.

Included are three feeding lines including cooled water feed line **320**, ambient temperature feeding line **330,** and heated water feeding line **340**. Fitted in each feeding line are respective valving or flow control arrangements **322, 332** and **342**, linked to the pump through a manifold arrangement **310.** Through control of valves or flow regulators **322, 332** and **342**, the rate of flow in each of the respective feeding lines is controlled.

The cooled water feeding line includes a cooling unit **324**, which may, for example, be a Peltier-based unit of the kind disclosed in W02011/030339, the relevant content of which being incorporated herein by reference. Cooled water is then collected and stored in cooled water reservoirs **326**. Pump **308** and valving arrangement **322** cooperate so as to continuously fill reservoir **326** with cooling water. The cooled water reservoir **326** as well as the ambient temperature water reservoir **304** may be fitted with a water level indicator of the kind disclosed in PCT Application Serial No. PCT/IL2011/050085.

Feeding line **320** includes also a pump **328** which is configured to draw cooled water from reservoir **326** and feed it into mixing chamber **120** which is linked to dispensing outlet **108.**

Hot water feeding line includes a heating unit **344** and a hot water reservoir **346**, typically forming part of the heating unit. A heating unit of this kind is disclosed in PCT publication no. W02011/114327.

Thus, by this configuration, the pump **308** provides the driving force that propels liquid from reservoir **304** to mixing chamber **120**, and from there to dispensing outlet **108** while flow regulators **322**, **332** and **342** regulate their relative flow in each of its respective feeding lines to achieve a certain desired temperature as set by the user. An example of such a regulator is a proportional electric valve, although the invention is not limited thereto.

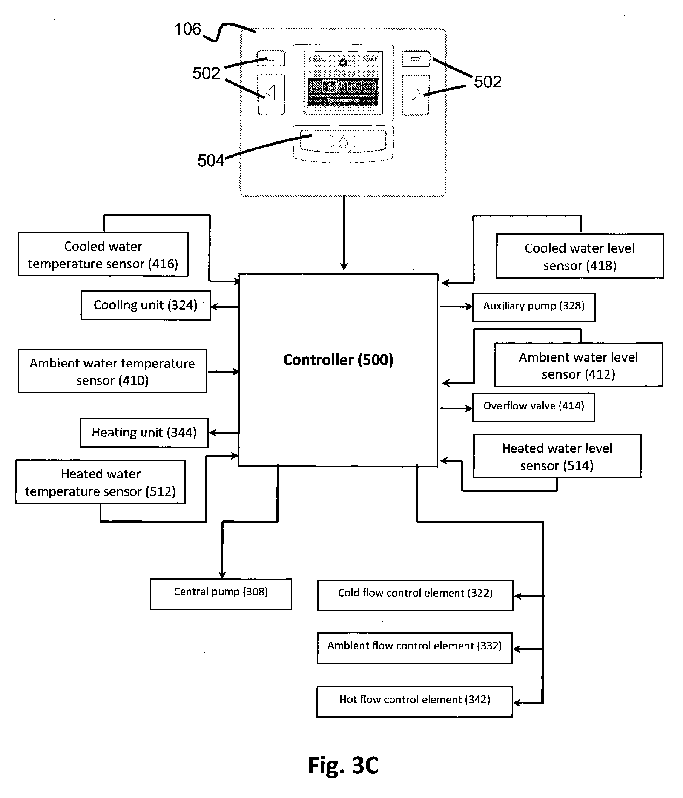

An embodiment with an alternative configuration is shown in **Fig. 3****B.** Components having the same function as those of **Fig. 3A** have been given like reference numerals and the reader is referred to the description of these components above to understand their function.

The main difference is that in this embodiment, rather than controlling flow in the three flow systems through a flow regulator, each of the flow systems **320, 330** and **340** is provided with its own respective pump, **352, 354** and **356.** Each of the pumps is linked to reservoir **304**, either directly as shown schematically in **Fig. 3B**, or, alternatively, through a manifold arrangement linked to a single outlet of the reservoir.

A control unit operable in a system in accordance with an embodiment of the invention, of the kind illustrated in **Fig. A**, is shown in **Fig. 3C****.** A controller **500** is linked to a control consul **106** which includes an actuation button or switch **504** that permits a user to activate the water dispensing action and a temperature control module **502** permitting the user to set a desired temperature for the dispensed water. The controller is linked and is operable to activate the central pump **308,** to induce dispensing of water out of the dispensing outlet. The controller is also linked to a variety of sensing elements, including temperature sensors **410, 416** and **512,** water levels sensors **412, 418** and **514** and is also operable to activate the three flow control elements **322, 332** and **342** as well as auxiliary pump **328**. In addition, the controller is also operable to control the activity of the cooling unit **324** and the heating unit **344** as well as the overflow valve **414**.

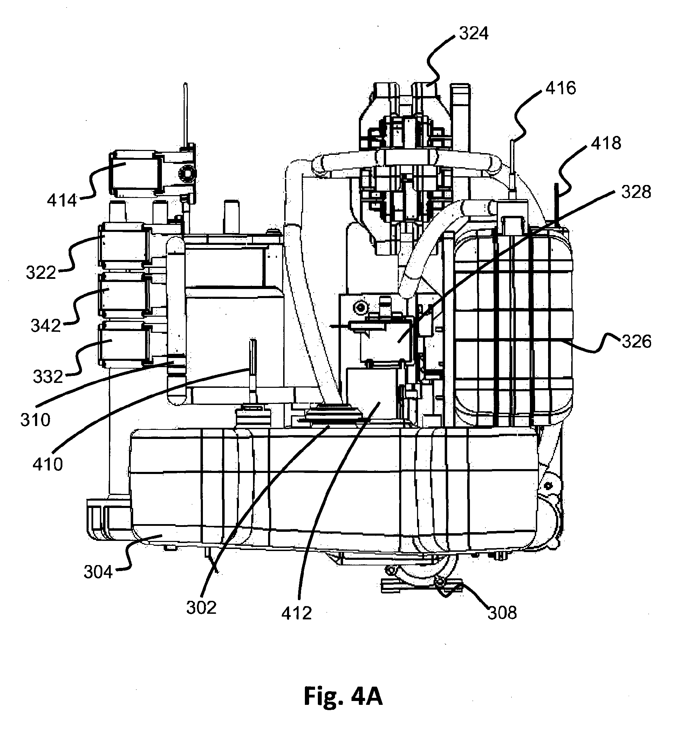

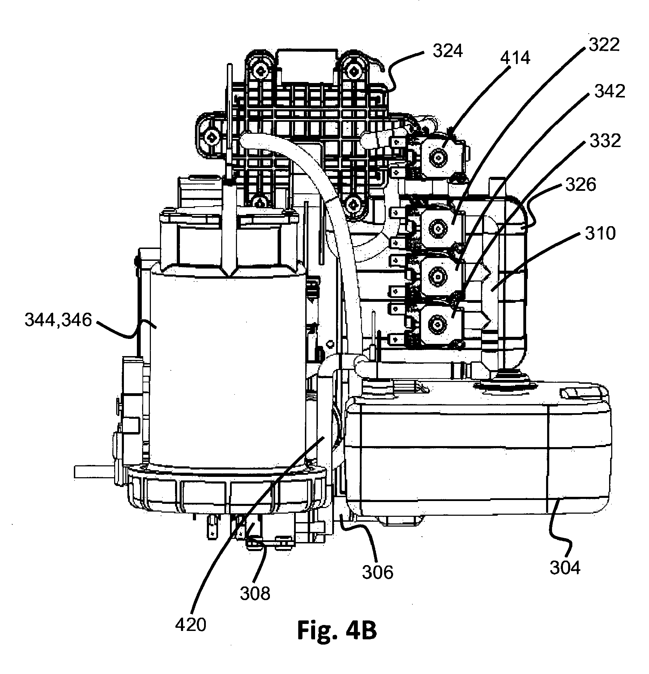

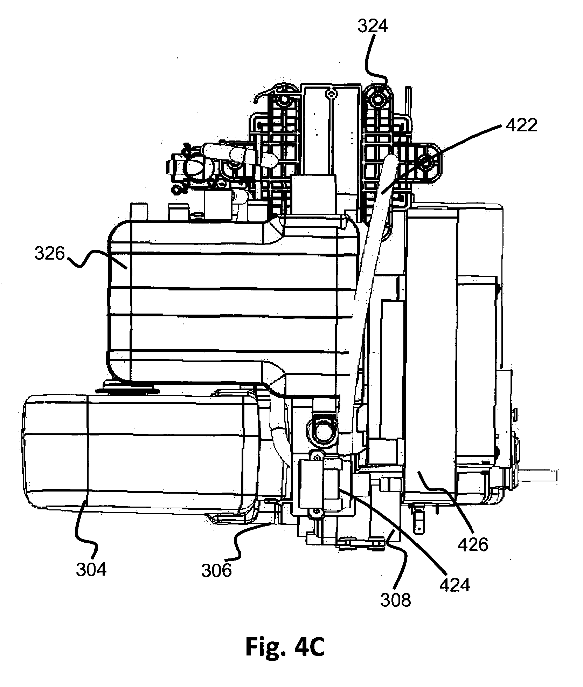

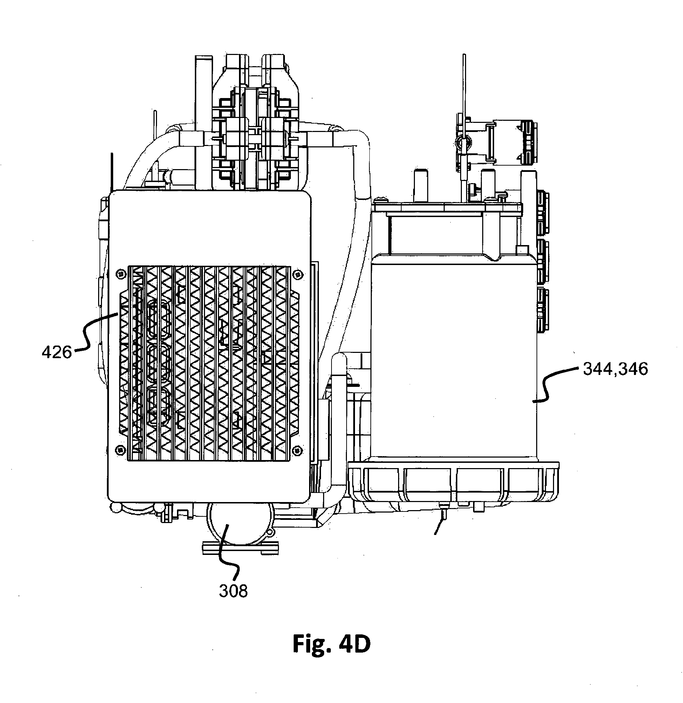

Reference is now being made to **Figs. 4A-4D**, which show a system of the invention having a configuration of the kind shown schematically in **Fig. 3A****.** Accordingly, like reference numerals were used in **Figs. 4A-4D** to relate to components having the same function as those of **Fig. 3A**.

As can be seen particularly in **Figs. 4A-4C**, fitted at the bottom of the system is an ambient temperature water reservoir **304**, having an inlet **302**, which is linked to a water filtration system, not shown, and which is disclosed in the aforementioned PCT Application PCT/IL2012/050038. Reservoir **304** has a temperature sensor **410** and has an associated water level sensor **412**, the latter being linked to the filtration system to ensure filling of a reservoir and avoid overfilling. This is achieved through control of flow regulator **414**, in a manner as described in aforementioned PCT Application Serial No. PCT/IL2011/050085.

Linked to outlet **306** of reservoir **304**, is a pump **308** which is linked through tubing **420** to a manifold arrangement **310** feeding water to flow control elements **322, 332** and **342**, fitted on the cooled water feeding line, the ambient temperature water feeding line, and the heated water feeding line, respectively.

In the cooled water feeding line, water flows from flow regulator **322** to the Peltier-based cooling unit, configured in accordance with the disclosure in WO2011/030339. Other elements of the cooling arrangement include radiator **426** and pump **424**, for circulating a heat absorbing liquid from element **324** to radiator **426** for hit dissipation through tubing **422**.

Water cooled by cooling element **324** is then collected in cooled water reservoir **326** having an associated temperature sensor **416** and a water level indicator **418** of the kind noted below. The cooled water feeding line includes also a pump **328** which draws cooled water out of reservoir **326** and feeds it to the mixing chamber **120**.

Heated water feeding line includes a heating element **344** and an associated heated water reservoir **346**, of the kind noted below.

## Claims

1. A beverage dispensing system (100), comprising:
- a dispensing outlet (108) for dispensing beverage at a controlled temperature;
- a mixing chamber (120) upstream in a flow path to said outlet (108) such that dispensed beverage flows from said chamber (120) to the outlet (108);
- at least three feeding lines (320, 330, 340) feeding beverage of at least three different defined temperatures to said chamber (120); and
- a controller (500) for controlling the feed from each of said feeding lines (320, 330, 340) so as to yield a desired temperature of the dispensed beverage.

2. The dispensing system of claim 1, wherein said outlet (108) is integrally formed at the bottom of said chamber.

3. The dispensing system of claim 1 or 2, wherein said chamber (120) includes dividers dividing it into a plurality of sub-chambers (134, 136, 138).

4. The dispensing system of claim 3, wherein each sub-chamber is fed beverage by a different feeding line.

5. The dispensing system of any one of claims 1-4, comprising a feeding line for heated beverage (340), a feeding line for beverage at ambient temperature (330) and a feeding line for cooled beverage (320).

6. The dispensing system of claim 5, comprising a heated beverage reservoir (346), an ambient temperature beverage reservoir (304) and a cooled beverage reservoir (326) in flow communication with the feeding line for heated beverage (340), the feed line for ambient temperature beverage (330) and the feed line for cooled beverage (320), respectively.

7. The dispensing system of claim 6, wherein the heated beverage reservoir (346) and the cooled beverage reservoir (326) are fed liquid from the ambient temperature beverage reservoir (304).

8. The dispensing system of any one of claims 1-7, wherein one or more of the feed lines comprises a pump for propelling beverage therethrough towards the chamber.

9. The dispensing system of claim 6 or 7, comprising a first pump for propelling heated beverage through the heated beverage feeding line, a second pump for propelling beverage through the ambient temperature beverage feeding line, a third pump for propelling beverage from the ambient temperature reservoir to the cooled beverage reservoir through a liquid cooling unit and a fourth pump (328) for propelling beverage from the cooled beverage reservoir through the cooled beverage feeding line.

10. The dispensing system of claim 9, wherein the third pump is activated automatically to fill the cooled beverage reservoir; the first, second and fourth pump being automatically activated only during liquid dispensing, and their pumping rates being adjusted so as to achieve a desired dispensed beverage temperature.

11. The dispensing system of claim 8, wherein a pump propels beverage through more than one feeding line.

12. The dispensing system of claim 11, wherein said pump's outlet is linked, through a manifold, to more than one beverage feeding line and the flow rate in each of such feeding lines is controlled by flow control elements fitted on the individual feeding lines.

13. The dispensing system of claim 12, comprising an ambient temperature feeding line, a hot beverage feeding line which includes a heating arrangement for heating the beverage flowing therethrough, and a cooled beverage feeding line which includes a cooling element for cooling the beverage flowing therethrough; said pump being in flow communication with an outlet of an ambient temperature beverage reservoir and being configured to draw beverage therefrom and propel it, through a manifold system, to each of three feeding lines.

14. The dispensing system of claim 13, wherein the cooled beverage feeding line comprises a cooled beverage reservoir.

15. The dispensing system of claim 14, comprising an auxiliary pump configured for drawing liquid from the cooled beverage reservoir and propelling it to the mixing chamber.

16. The dispensing system of any one of claims 1-15, comprising temperature sensors for measuring temperature at each of the feeding lines.

17. The dispensing system of any one of claims 1-16, comprising a user interface permitting a user to input the desired temperature of the dispensed beverage.

18. A beverage dispenser comprising the system of any one of claims 1-17.

19. A drinking water dispenser comprising the system of any one of claims 1-17.

20. The dispenser of claim 18 or 19, comprising water filtration system.

## Patentansprüche

1. Getränkeausgabesystem (100), das aufweist:
- einen Abgabeauslass (108) zum Ausgeben eines Getränks bei einer geregelten Temperatur;
- eine Mischkammer (120), die in einem Strömungspfad so stromaufwärts zu dem Auslass (108) angeordnet ist, dass das ausgegebene Getränk von der Kammer (120) zu dem Auslass (108) fließt;
- zumindest drei Zufuhrleitungen (320, 330, 340), die ein Getränk mit zumindest drei unterschiedlichen festgelegten Temperaturen zu der Kammer (120) zuführen; und
- eine Steuerung (500) zum Steuern der Zufuhr von jeder der Zufuhrleitungen (320, 330, 340) so, dass eine gewünschte Temperatur des ausgegebenen Getränks erzielt wird.

2. Ausgabesystem nach Anspruch 1, worin der Auslass (108) am Boden der Kammer in einem Stück ausgebildet ist.

3. Ausgabesystem nach Anspruch 1 oder 2, worin die Kammer (120) Unterteilungen aufweist, die sie im mehrere Teilkammern (134, 136, 138) unterteilt.

4. Ausgabesystem nach Anspruch 3, worin jeder Teilkammer über eine andere Zufuhrleitung Getränk zugeführt wird.

5. Ausgabesystem nach einem der Ansprüche 1 bis 4, das eine Zufuhrleitung für ein heißes Getränk (340), eine Zufuhrleitung für ein Getränk bei Raumtemperatur (330) und eine Zufuhrleitung für ein gekühltes Getränk (320) aufweist.

6. Ausgabesystem nach Anspruch 5, das ein Reservoir (346) für ein heißes Getränk, ein Reservoir (304) für ein Getränk bei Raumtemperatur und ein Reservoir (326) für ein gekühltes Getränk aufweist, das in Fluidverbindung mit der Zufuhrleitung für ein heißes Getränk (340) bzw. der Zufuhrleitung für ein Getränk bei Raumtemperatur (330) bzw. der Zufuhrleitung für ein gekühltes Getränk (320) steht.

7. Ausgabesystem nach Anspruch 6, worin dem Reservoir (346) für ein heißes Getränk und dem Reservoir (326) für ein gekühltes Getränk Flüssigkeit von dem Reservoir (304) für ein Getränk bei Raumtemperatur zugeführt wird.

8. Ausgabesystem nach einem der Ansprüche 1 bis 7, worin eine oder mehrere der Zufuhrleitungen eine Pumpe zum Fördern von Getränk durch sie hindurch in Richtung Kammer aufweisen.

9. Ausgabesystem nach Anspruch 6 oder 7, das eine erste Pumpe zum Fördern eines heißen Getränks durch die Zufuhrleitung für ein heißes Getränk, eine zweite Pumpe zum Fördern von Getränk durch die Zufuhrleitung für ein Getränk bei Raumtemperatur, eine dritte Pumpe zum Fördern von Getränk aus dem Reservoir für ein Getränk bei Raumtemperatur zu dem Reservoir für ein gekühltes Getränk durch eine Flüssigkeitskühleinheit und eine vierte Pumpe (328) zum Fördern von Getränk aus dem Reservoir für ein gekühltes Getränk durch die Zufuhrleitung für ein gekühltes Getränk aufweist.

10. Ausgabesystem nach Anspruch 9, worin die dritte Pumpe zum Befüllen des Reservoirs für ein gekühltes Getränk automatisch aktiviert wird, wobei die erste, die zweite und die vierte Pumpe nur während der Flüssigkeitsabgabe automatisch aktiviert werden und wobei ihre Pumpgeschwindigkeiten so abgestimmt sind, dass eine gewünschte Temperatur des abgegebenen Getränks erzielt wird.

11. Ausgabesystem nach Anspruch 8, worin die Pumpe Getränk durch mehr als eine Zufuhrleitung fördert.

12. Ausgabesystem nach Anspruch 11, worin der Pumpenauslass über einen Verteiler mit mehr als einer Getränkezufuhrleitung verbunden ist und worin die Flussrate in jeder dieser Zufuhrleitungen durch Flusssteuerelemente gesteuert wird, die an die einzelnen Zufuhrleitungen angeschlossen sind.

13. Ausgabesystem nach Anspruch 12, das eine Zufuhrleitung bei Raumtemperatur, eine Zufuhrleitung für ein heißes Getränk, die eine Heizungsanordnung zum Erwärmen des hindurchfließenden Getränks umfasst, und eine Zufuhrleitung für ein gekühltes Getränk aufweist, die ein Kühlelement zum Kühlen des hindurchfließenden Getränks umfasst, wobei sich die Pumpe mit einem Auslass eines Reservoirs für ein Getränk bei Raumtemperatur in Fluidverbindung befindet und ausgebildet ist, aus diesem ein Getränk anzusaugen und es durch ein Verteilsystem zu jeder der drei Zufuhrleitungen zu fördern.

14. Ausgabesystem nach Anspruch 13, worin die Zufuhrleitung für ein gekühltes Getränk ein Reservoir für ein gekühltes Getränk umfasst.

15. Ausgabesystem nach Anspruch 14, das eine Zusatzpumpe aufweist, die zum Saugen von Flüssigkeit aus dem Reservoir für das gekühlte Getränk und zum Fördern der Flüssigkeit zur Mischkammer ausgebildet ist.

16. Ausgabesystem nach einem der Ansprüche 1 bis 15, das Temperatursensoren für die Temperaturmessung bei jeder der Zufuhrleitungen aufweist.

17. Ausgabesystem nach einem der Ansprüche 1 bis 16, das eine Benutzerschnittstelle aufweist, die es einem Benutzer ermöglicht, die gewünschte Temperatur des ausgegebenen Getränks einzugeben.

18. Getränkeautomat, der ein System nach einem der Ansprüche 1 bis 17 aufweist.

19. Trinkwasserautomat, der ein System nach einem der Ansprüche 1 bis 17 aufweist.

20. Automat nach Anspruch 18 oder 19, der ein Wasserfiltersystem aufweist.

## Revendications

1. Système de distribution de boissons (100), comprenant :
une sortie de distribution (108) pour distribuer des boissons à une température régulée ;
une chambre de mélange (120) en amont dans une voie d'écoulement vers ladite sortie (108) de telle sorte que les boissons distribuées s'écoulent de ladite chambre (120) vers la sortie (108) ;
au moins trois lignes d'alimentation (320, 330, 340) alimentant ladite chambre (120) en boissons à au moins trois températures définies différentes ; et
un dispositif de commande (500) pour commander l'alimentation de chacune desdites lignes d'alimentation (320, 330, 340) de manière à produire une température désirée de la boisson distribuée.

2. Système de distribution de la revendication 1, dans lequel ladite sortie (108) est formée en un seul tenant au fond de ladite chambre.

3. Système de distribution de la revendication 1 ou 2, dans lequel ladite chambre (120) comporte des cloisons la divisant en une pluralité de sous-chambres (134, 136, 138).

4. Système de distribution de la revendication 3, dans lequel chaque sous-chambre est alimentée en boisson par une conduite d'alimentation différente.

5. Système de distribution de l'une quelconque des revendications 1-4, comprenant une ligne d'alimentation pour une boisson chauffée (340), une ligne d'alimentation pour une boisson à température ambiante (330) et une ligne d'alimentation pour une boisson refroidie (320).

6. Système de distribution de la revendication 5, comprenant un réservoir de boisson chauffée (346), un réservoir de boisson à température ambiante (304) et un réservoir de boisson refroidie (326) en communication fluidique avec la ligne d'alimentation pour la boisson chauffée (340), la ligne d'alimentation pour la boisson à température ambiante (330) et la ligne d'alimentation pour la boisson refroidie (320), respectivement.

7. Système de distribution de la revendication 6, dans lequel le réservoir de boisson chauffée (346) et le réservoir de boisson refroidie (326) sont alimentés en liquide à partir du réservoir de boisson à température ambiante (304).

8. Système de distribution de l'une quelconque des revendications 1-7, dans lequel une ou plusieurs des lignes d'alimentation comprend/comprennent une pompe pour propulser la/les boisson(s) à travers celle(s)-ci vers la chambre.

9. Système de distribution de la revendication 6 ou 7, comprenant une première pompe pour propulser la boisson chauffée à travers la ligne d'alimentation en boisson chauffée, une deuxième pompe pour propulser la boisson à travers la ligne d'alimentation en boisson à température ambiante, une troisième pompe (328) pour propulser la boisson du réservoir à température ambiante au réservoir de boisson refroidie à travers une unité de refroidissement de liquide et une quatrième pompe (328) pour propulser la boisson du réservoir de boisson refroidie à travers la ligne d'alimentation en boisson refroidie.

10. Système de distribution de la revendication 9, dans lequel la troisième pompe est activée automatiquement pour remplir le réservoir de boisson refroidie ; les première, deuxième et quatrième pompes étant automatiquement activées uniquement lors de la distribution de liquide, et leurs débits de pompage étant réglé de manière à obtenir une température désirée de boisson distribuée.

11. Système de distribution de la revendication 8, dans lequel une pompe propulse la boisson à travers plus d'une ligne d'alimentation.

12. Système de distribution de la revendication 11, dans lequel ladite sortie de pompe est reliée, par l'intermédiaire d'un collecteur, à plus d'une ligne d'alimentation en boisson et le débit d'écoulement dans chacune de ces lignes d'alimentation est commandé par des éléments de commande d'écoulement ajustés sur les lignes d'alimentation individuelles.

13. Système de distribution de la revendication 12, comprenant une ligne d'alimentation à température ambiante, une ligne d'alimentation en boisson chaude qui comporte un agencement de chauffage pour chauffer la boisson s'écoulant à travers celui-lui, et une ligne d'alimentation en boisson refroidie qui comporte un élément de refroidissement pour refroidir la boisson s'écoulant à travers celui-ci ; ladite pompe étant en communication fluidique avec une sortie d'un réservoir de boisson à température ambiante et étant configurée pour aspirer la boisson de celui-ci et la propulser, par l'intermédiaire d'un système de collecteur, à chacune des trois lignes d'alimentation.

14. Système de distribution de la revendication 13, dans lequel la ligne d'alimentation en boisson refroidie comprend un réservoir de boisson refroidie.

15. Système de distribution de la revendication 14, comprenant une pompe auxiliaire configurée pour aspirer le liquide du réservoir de boisson refroidie et le propulser dans la chambre de mélange.

16. Système de distribution de l'une quelconque des revendications 1-15, comprenant des capteurs de température pour mesurer la température à chacune des lignes d'alimentation.

17. Système de distribution de l'une quelconque des revendications 1-16, comprenant une interface utilisateur permettant à un utilisateur d'introduire la température désirée de la boisson distribuée.

18. Distributeur de boisson comprenant le système de l'une quelconque des revendications 1-17.

19. Distributeur d'eau potable comprenant le système de l'une quelconque des revendications 1-17.

20. Distributeur de la revendication 18 ou 19, comprenant un système de filtration d'eau.
